# EUROPEAN PATENT APPLICATION

(11) **EP 4 082 406 A1**
(43) Date of publication of application: **02.11.2022**
(21) Application number: 21171138.7
(22) Date of filing: 29.04.2021
(51) Int. Cl.: A47J 31/42, A47J 42/40

(54) **AUTOMATIC COFFEE MACHINE WITH GRINDER**

(71) Applicant: BSH Hausgeräte GmbH, 81739 München (DE)
(72) Inventor: Jäger, Harald, 83349 Palling (DE); Kugler, Kathrin, 83352 Altenmarkt a.d. Alz (DE); Schreiner, Thomas, 84431 Rattenkirchen (DE)

(57) **Abstract**

An automatic coffee machine (10) comprising a coffee beans chamber (11) for receiving coffee beans, a grinder (12) for grinding the coffee beans, a chute (13) with a chute outlet (14) for transferring a ground coffee from the grinder (12) to the brewing unit in a first working position, wherein the chute (13) is rotatable between the first working position and at least a second working position in which the chute (13) transfers the ground coffee outside the coffee machine (10).

The present invention enables a coffee machine with a removable grinder which enables to use the grinder for different purposes. Thanks to the movable chute the ground coffee can be collected outside the coffee machine. The coffee machine enables the consumer to use the device not only for brewing coffee but also for grinding diverse kind of materials.

## Description

The present invention relates to an automatic coffee machine comprising a coffee beans chamber for receiving coffee beans, a grinder for grinding the coffee beans, a chute with a chute outlet for transferring a ground coffee from the grinder to the brewing unit in a first working position.

The automatic coffee machines are known from the state of the art. Fully automatic coffee machines are usually provided with a built-in coffee grinder which enables the consumer to set the grind sizes depending on the origin of the coffee beans and on the ordered beverage. The coffee grinders allows to make fresh brews in a simple and easy way. The ground coffee is transferred by the grinding coffee outlet to the brewing unit where is pressed and poured with boiling water. The finished drink is poured into the cup through the coffee outlet. The automatic coffee machines allows the consumer to obtain a favorite beverage with a single push of a button so with minimal user intervention in the preparation process.

The patent application WO 2017/ 148 603 A1 discloses a coffee mill, in particular for installation in automatic coffee machines, comprising an electric drive motor for driving a grinder, wherein a reduction gearing designed as a planetary gearing is arranged between the drive motor and the grinder, the sun gear of which reduction gearing can be driven by the drive motor. According to the invention, the planetary gearing has a plurality of planet bars arranged around the sun gear in the circumferential direction, which planet bars comprises a first axial section, which meshes with the sun gear, and an axially adjacent second axial section, which has a second diameter that is different from, preferably smaller than, a first diameter of the first axial section and which meshes with a stationary ring gear, and the toothed bars are arranged so as to drive an output element by means of the first axial sections of the toothed bars.

The patent EP 2 878 240 B1 discloses a fully automatic coffee machine for household purposes, having a housing and a storage container for coffee beans which is removable therefrom and which is movable for this purpose on an actuating path, having a grinding mechanism for coffee beans, having a discharge opening of the storage container for the supply of the beans to the grinding mechanism and having a closing device for closing the discharge opening with a door, which can be adjusted between an open position for releasing the dispensing opening and a closed position for closing the dispensing opening when the storage container is moved, is further developed by the fact that the door can be moved between the open position and the closed position without pretension by manually moving the storage container.

The patent application WO 2014/ 026 485 A1 discloses an automatic coffee machine with a detachable bean-grinding apparatus. A detaching/installing and adjusting mechanism for the bean-grinding apparatus comprises a connecting part connected in an easily detachable fashion with a bean case component, and an adjusting part able to adjust an upper grinding wheel component in performing reciprocal movements so as to adjust the grinding distance of the upper grinding wheel component and a lower grinding wheel component. Cleaning and maintenance of the grinding components by a user is facilitated while the fineness of ground powder granules can be adjusted as needed. A powder outlet channel of a bean-grinding chamber is an inclined pipe structure, and the top part of an opening in the initial portion of the powder outlet channel intersects with a side wall and a bottom face of the bean-grinding chamber. The distance between the outermost end of a coffee grounds remover tray and the rotational centerline of the coffee grounds remover tray is greater than the minimum distance between the opening in the initial portion of the powder outlet channel and the rotational centerline of the coffee grounds remover tray. By means of the inclined powder outlet channel coffee powder can freely slide into a brewing apparatus, and the coffee grounds remover tray plays the role of preventing the risk of and eliminating powder blocking the bean-grinding chamber and the power outlet channel.

It is the object of the present invention to provide a further development with an advantage over the state of the art and provide a coffee machine with grinder with several possibilities of use.

This object is solved by an automatic coffee machine with grinder where the chute is rotatable between the first working position and at least a second working position in which the chute transfers the ground coffee outside the coffee machine.
The coffee machine grinder is provided to grind the coffee beans. The coffee powder is transferred by the chute through the chute outlet to the brewing unit in order to prepare a beverage. The chute is a simple passage down which the coffee powder slides to get out the grinder. The chute is rotatable between the first working position and at least a second working position. The first working position is a standard position in which the chute transfers the ground coffee into the brewing chamber. The second working position is a position in which the chute outlet is directed outside the coffee machine. In such position ground coffee is collected outside the coffee machine and can be used for preparation different kind of coffee e.g. Turkish coffee for preparation of which a finely ground coffee is needed. The ground coffee is boiled with water in special pot. In order to prepare such a coffee the ground coffee is required which can be grinded by the coffee machine in which the chute can be rotated into the second working position in which the chute outlet is directed outside the coffee machine. The coffee powder is collected separately. The positive effect of such solution is that thanks to the rotatable chute the customer has an additional feature i.e. collecting the coffee powder outside the coffee machine and using the coffee powder for different purpose.

In another embodiment of the invention the rotation of the chute is performed by an additional drive mechanism. The drive mechanism provides to control the movement of the chute automatically by the user by giving a control command to the coffee machine e.g. by selecting the right option on the coffee machine display. The positive effect of using the drive mechanism is simplifying the usage of the device.

In another embodiment of the invention rotation of the chute is performed manually after releasing a blockade by pushing a blockade button. The coffee machine chute can be operated manually and the chute movement from the first working position into the second working position is possible by releasing a simple, mechanical blockade e.g. latch, hook etc. Releasing can be performed by pushing a button. The positive effect is that such simple, mechanical solution is more reliable and durable in comparison to the advanced, electronic blockades.

In another embodiment of the invention the grinder is detachably connected to the coffee machine. The grinder is provided as a separate module which can be mounted into the coffee machine body and also can be used independently from the coffee machine. The positive effect is that the user can use the grinder not only for grinding the coffee beans but also for different kind of materials e.g. cereal grains, spices etc. The positive effect is that the user does not need an additional, separate grinder but can use the coffee machine grinder.

In another embodiment of the invention the presence of the grinder is detected by a first sensor and the position of the chute is detected by a second sensor. The first and the second sensor are optical, magnetic or ultrasonic sensors.
The coffee machine grinder is a removable device and the chute position is changeable. Establishing the presence or absence of the grinder and detecting the chute position are necessary for the proper functioning of the whole appliance. The use of the sensors results in providing the coffee machine which is attractive for the consumer. The presence of sensors helps also to limit the risk of no proper using the coffee machine.

In the preferred embodiment of the invention the brewing process starts only if the first sensor senses the presence of the grinder and the second sensor detects the chute in its first position. This two conditions must be met simultaneously for the brewing process to begin. When the first sensor detects that the grinder is mounted into the coffee machine body and the chute is in its first working position the brewing process can start. In case the chute is in its second working position, after the grinding process, the brewing process can't begin as the ground coffee is not directed to the brewing unit. The ground coffee is collected in the external container and can be used for preparing different kind of coffee beverages. Thanks to the sensor the risk of not proper use of the coffee machine is eliminated.

In the preferred embodiment of the invention the grinder has an external power supply. In order to start the grinder outside the coffee machine the grinder has to be equipped with and external power supply. It can be a docking station or a battery. The positive effect is that the grinder can be used autonomously without turning on the whole coffee machine.

The present invention enables a coffee machine with a removable grinder which enables to use the grinder for different purposes. Thanks to the movable chute the ground coffee can be collected outside the coffee machine. The coffee machine enables the consumer to use the device not only for brewing coffee but also for grinding diverse kind of materials.

The construction of the invention, however, together with additional objects and corresponding advantages will be best understood from the following description of specific embodiments and in connection with the accompanying drawing.

In the drawing:
- Fig. 1: shows an isometric view of the coffee machine with the grinder in the docking position
- Fig. 2: shows an isometric view of the coffee machine with the grinder separated from the coffee machine
- Fig. 3: shows a schematic view of the coffee machine with the chute in the first working position
- Fig. 4: shows a schematic view of the coffee machine with the chute in the second working position

In cooperation with attached drawing, the technical contents and detailed description of the present invention are described thereinafter according to a preferable embodiment, being not used to limit its executing scope. Any equivalent variation and modification made according to appended claims is all covered by the claims claimed by the present invention.

In the following description of the preferred embodiments of the present invention, similar identical reference numbers designate identical or comparable components.

The automatic coffee machine comprises a coffee machine body, a coffee beans chamber for collecting a coffee beans dedicated for preparation the coffee beverage. The coffee machine has a grinder for grinding coffee beans. The ground coffee is directed from the coffee grinder to the brewing unit by the chute comprising a chute outlet. The coffee machine is provided also with other standard elements like coffee outlet or a drawer for collecting wastewater. The coffee beans are grinded by the grinder, directed by the chute through chute outlet to the brewing unit. The brewing process starts. After the brewing process the coffee beverage gets out the coffee machine through the coffee spout into the cup.

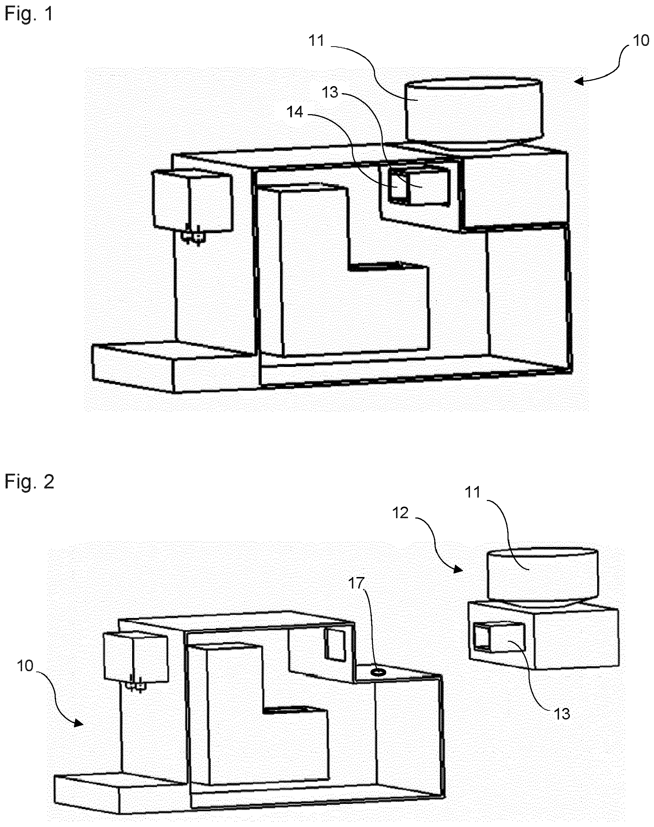

Fig. 1 shows an isometric view of the coffee machine 10 with the grinder 12 in the docking position. In this position of the grinder 12 is assembled with the coffee machine 10 and acts as a standard built-in device. In such position the grinder 12 is provided with an additional power supply (not shown on the fig.). The grinder 12 has a coffee beans chamber 11 in which the fresh coffee beans are collected in order to be ground. The freshly ground coffee is required for preparing a coffee beverage of good quality.
Fig. 2 shows an isometric view of the coffee machine 10 with the grinder 12 separated from the coffee machine 10. In such position of the grinder 12 it acts as a separate device and can be used for grinding not only coffee beans but also different kind of materials. The ground material is collected outside the coffee machine 10 and can be used for preparing different kind of coffee or for preparing spices or flour.

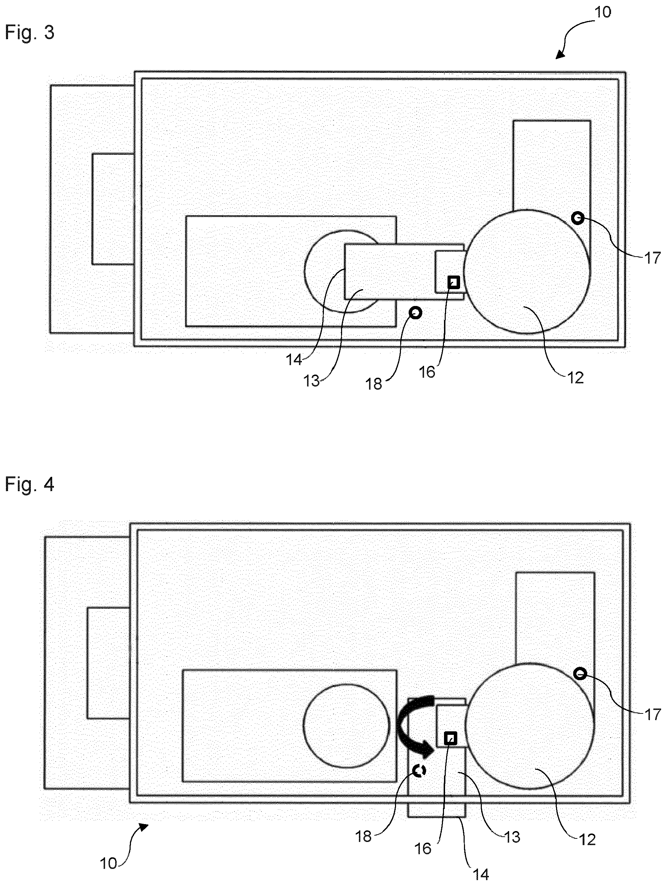

Fig. 3 shows a schematic view of the coffee machine 10 with the chute 13 in the first working position. The first working position means that the chute outlet 14 is directed in such a way that the ground coffee is directed straight to the brewing chamber. The coffee machine 10 is provided with sensors for detecting the position of the grinder 12 and the chute 13. The position of the grinder 12 is sensed by the first sensor 17. The position of the chute 13 is sensed by the second sensor 18. Fig. 3 shows the coffee machine 10 with the grinder 12 in docking position and the chute 13 in the first working position. Only in such configuration of the grinder 12 and the chute 13 the brewing process can start. The position of the chute 13 can be changed manually by the user through pushing the blockade button 16 which releases a mechanical blockade which is provided in order to prevent the chute 13 against changing position.

Fig. 4 shows a schematic view of the coffee machine 10 with the chute 13 in the second working position. When the chute 13 is its second working position the chute outlet 14 is directed outside the body of the coffee machine 10. In such position the ground coffee is collected in a separate container (not shown on the figure). When the chute 13 is in the second working position, after grinding process, the brewing process can't be initiated as the coffee powder does not reach the brewing unit.

The present invention enables a coffee machine with a removable grinder which enables to use the grinder for different purposes. Thanks to the movable chute the ground coffee can be collected outside the coffee machine. The coffee machine enables the consumer to use the device not only for brewing coffee but also for grinding diverse kind of materials.

### REFERENCE SIGNS

- 10: coffee machine
- 11: coffee beans chamber
- 12: grinder
- 13: chute
- 14: chute outlet
- 16: blockade button
- 17: first sensor
- 18: second sensor

## Claims

1. An automatic coffee machine (10) comprising a coffee beans chamber (11) for receiving coffee beans, a grinder (12) for grinding the coffee beans, a chute (13) with a chute outlet (14) for transferring a ground coffee from the grinder (12) to the brewing unit in a first working position, **characterized in that** the chute (13) is rotatable between the first working position and at least a second working position in which the chute (13) transfers the ground coffee outside the coffee machine (10).

2. The automatic coffee machine (10) according to claim 1, **characterized in that** the rotation of the chute (13) is performed by an additional drive mechanism.

3. The automatic coffee machine (10) according to claim 1, **characterized in that** the rotation of the chute (13) is performed manually releasing a blockade by pushing a blockade button (16).

4. The automatic coffee machine (10) according to any of the preceding claims, **characterized in that** the grinder (12) is detachably connected to the coffee machine (10).

5. The automatic coffee machine (10) according to any of the preceding claims, **characterized in that** the presence of the grinder (12) is detected by a first sensor (17).

6. The automatic coffee machine (10) according to any of preceding claims, **characterized in that** the position of the chute (13) is detected by a second sensor (18).

7. The automatic coffee machine (10) according to any of the preceding claims, **characterized in that** the first sensor (17) and the second sensor (18) are an optical, magnetic, or ultrasonic sensors.

8. The automatic coffee machine (10) according to any of the preceding claims, **characterized in that** the brewing process starts only if the first sensor (17) senses the presence of the grinder (12) and the second sensor (18) detects the chute (13) in its first position.

9. The automatic coffee machine (10) according to any of the preceding claims, **characterized in that** the grinder (12) has an external power supply.

## Amended claims

### Amended claims in accordance with Rule 137(2) EPC.

1. An automatic coffee machine (10) comprising a coffee beans chamber (11) for receiving coffee beans, a grinder (12) for grinding the coffee beans, a chute (13) with a chute outlet (14) for transferring a ground coffee from the grinder (12) to the brewing unit in a first working position, the chute (13) is rotatable between the first working position and at least a second working position in which the chute (13) transfers the ground coffee outside the coffee machine (10) **characterized in that** the rotation of the chute (13) is performed by an additional drive mechanism.

2. The automatic coffee machine (10) according to claim 1, **characterized in that** the rotation of the chute (13) is performed manually releasing a blockade by pushing a blockade button (16).

3. The automatic coffee machine (10) according to any of the preceding claims, **characterized in that** the grinder (12) is detachably connected to the coffee machine (10).

4. The automatic coffee machine (10) according to any of the preceding claims, **characterized in that** the presence of the grinder (12) is detected by a first sensor (17).

5. The automatic coffee machine (10) according to any of preceding claims, **characterized in that** the position of the chute (13) is detected by a second sensor (18).

6. The automatic coffee machine (10) according to any of the preceding claims 4-5, **characterized in that** the first sensor (17) and the second sensor (18) are an optical, magnetic, or ultrasonic sensors.

7. The automatic coffee machine (10) according to any of the preceding claims 4-6, **characterized in that** the brewing process starts only if the first sensor (17) senses the presence of the grinder (12) and the second sensor (18) detects the chute (13) in its first position.

8. The automatic coffee machine (10) according to any of the preceding claims, **characterized in that** the grinder (12) has an external power supply.
